# EUROPEAN PATENT SPECIFICATION

(11) **EP 1 112 471 B1**
(45) Date of publication and mention of the grant of the patent: **27.10.2004**
(21) Application number: 99968705.6
(22) Date of filing: 27.08.1999
(51) Int. Cl.: G01B 5/012, G01B 7/012

(54) **ARM FOR A HEAD FOR THE LINEAR DIMENSION CHECKING OF MECHANICAL PIECES AND HEAD INCLUDING SAID ARM**
ARM FÜR EINEN KOPF ZUM PRÜFEN DER LINEARDIMENSION VON MECHANISCHEN STÜCKEN UND KOPF MIT DEM ARM
BRAS S'ADAPTANT A UNE TETE POUR CONTROLER LES DIMENSIONS LINEAIRES DE PIECES MECANIQUES ET TETE COMPRENANT CE BRAS

(30) Priority: 08.09.1998 IT BO980520
(43) Date of publication of application: 04.07.2001
(73) Proprietor: MARPOSS SOCIETA PER AZIONI, I-40010 Bentivoglio (IT)
(72) Inventor: DALL'AGLIO, Carlo, I-40070 Castello D'argile (IT)
(86) International application number: PCT/EP1999/006306
(87) International publication number: WO 2000/014475

(56) References cited:
- EP-A- 0 824 977
- WO-A-98/20297
- US-A- 4 341 019
- US-A- 4 503 616
- US-A- 4 979 093
- US-A- 4 996 616
- US-A- 5 157 845

## Description

### Technical Field

The present invention relates to an arm for a head for the linear dimension checking of mechanical pieces, the head including a casing and a movable arm-set, the arm having a first end for the coupling to the movable arm-set and a second end for supporting a feeler.

The invention also relates to a head for the linear dimension checking of mechanical pieces including a casing that defines a longitudinal geometrical axis, an arm-set movable with respect to the support structure, carrying an arm and a feeler, coupled to the arm, for touching a surface of the mechanical piece to be checked.

### Background Art

There are known gauging or measuring heads for the linear dimension checking of mechanical pieces that comprise a casing, a movable arm-set, an arm, coupled to the movable arm-set and carrying a feeler, and a transducer for providing a signal responsive to the position of the feeler.

A head of this type is disclosed, for example, in international patent application published under WO 98/20297.

In the known heads the arms, that can be more or less long depending on the type of application, are typically made of steel and have circular, square or rectangular cross-sections.

The arms must be considerably rigid and relatively light. These requirements are particularly important in the dynamic checkings, in other terms when the checking is carried out under the conditions of mutual motion between the head and the piece.

One of the most severe dynamic checking applications regards the checking of pieces with an interrupted surface, for example grooved pieces, in the course of the machining in grinding machines. The pieces and the grinding wheel rotate at high speeds and are subject to a flow of coolant, that can stress the arm. In consideration of the trend to increase the speeds and in general the productivity of the machinings, and concurrently reduce the tolerances of the machined pieces, it is understood how, in some applications, it can be difficult to manufacture gauging heads with adequate repeatability and accuracy.

### Disclosure of Invention

An object of the present invention is to provide a gauging or measuring head for the linear dimension checking of mechanical pieces, that guarantees high standards of repeatability and accuracy, and utilizes a sufficiently rigid and light arm, therefore an arm that is particularly suitable for withstanding the stresses of the coolant flow and being applied for the checking of pieces with an interrupted surface, made of even soft material.
Another object of the present invention is to manufacture, in an extremely simple and rapid way without involving expensive and lengthy mechanic machinings, an arm for a gauging or measuring head that has the above mentioned features.

Yet another object of the present invention is to provide a gauging or measuring head in which the position of the arm relative to the head can be adjusted in a simple and rapid way.

These and other objects are achieved by an arm for a head for the linear dimension checking of mechanical pieces according to claim 1, and a head for the linear dimension checking of mechanical pieces according to claim 8.

### Brief Description of the Drawings

The invention is now described in more detail with reference to the enclosed sheet of drawings, given by way of non limiting example, wherein:
figure 1 is a side view of a gauging head provided with an arm according to the invention;
figure 2 is a plan view of an arm and a threaded coupling and adjustment device of the head of figure 1;
figure 3 is a cross-sectional view, taken along line III-III, of the arm and the threaded coupling and adjustment device shown in figure 2.

### Best Mode for Carrying Out the Invention

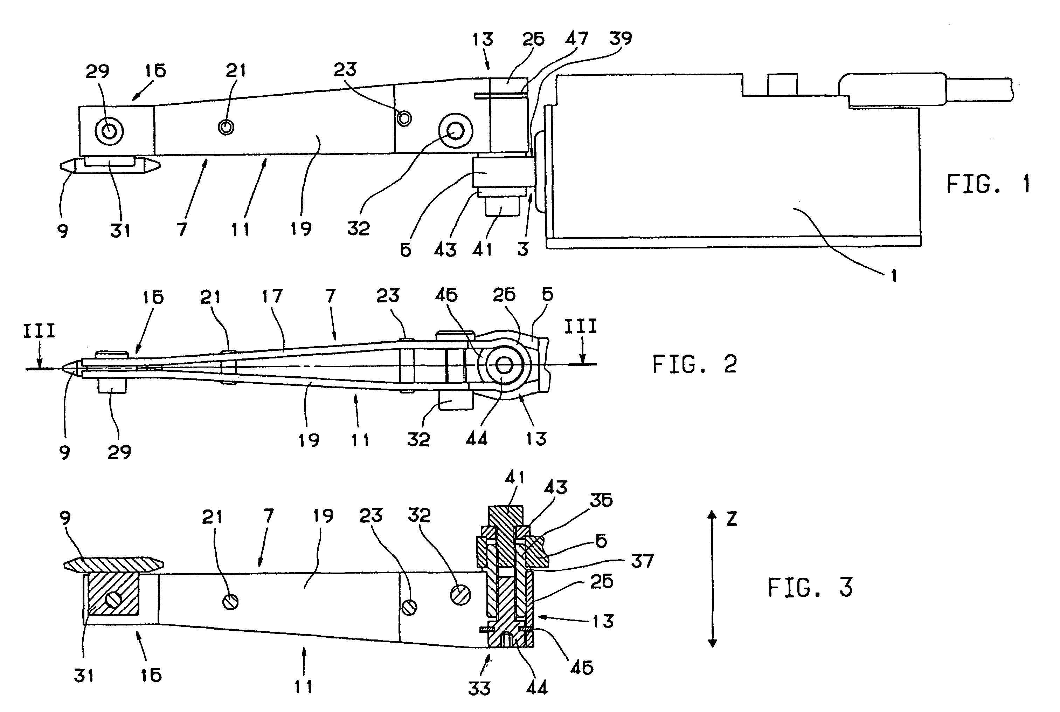

The head shown in figure 1, more specifically a gauging head, includes a substantially parallelepipedon-shaped, steel casing **1**, that forms a support element and defines a longitudinal geometrical axis. A movable arm-set **3** is partially housed in casing **1** and carries, at the end portion that protrudes from casing **1**, a support element **5** for an arm **7**. Arm **7** defines a first end **13** for the coupling to the movable arm-set **3** and a second end **15**, that supports a feeler **9**, for contacting a piece to be checked. Arm **7** includes an element **11** made of bent sheet, for example titanium sheet, with two longitudinal, separate portions **17** and **19**, arranged side by side and a portion **25** for coupling the two longitudinal portions **17** and **19** at the first end **13.**

The two longitudinal portions **17** and **19** have free ends, at the second end **15**, to which there is coupled a coupling device for coupling feeler **9** to arm **7**, including an element, or small plate, **31** for supporting feeler **9**, and a bolt **29** with screw traversing a pair of facing holes in the two free ends and a corresponding hole in plate **31.** By screwing the nut of the bolt **29,** the free ends of the longitudinal portions **17** and **19** are clamped to plate **31.** For the purpose of enhancing the rigidity of arm **7**, the longitudinal portions **17** and **19** are coupled to each other by means of stiffening elements **21** and **23**, as, for example, rivets, inserted in corresponding pairs of facing holes, obtained in the two longitudinal portions **17** and **19.**

The portion **25** for coupling the two longitudinal portions **17** and **19** can be elastically strained so as to enable the coupling of the sheet element **11** to the movable arm-set **3** in the hereinafter described manner.

A threaded coupling and adjustment device **33** includes an internally threaded bushing **35**, an adjustment screw **44** and an elastic safety ring **45**.

The adjustment screw **44** is secured to element **11** at the coupling portion **25**, by means of the elastic safety ring **45** that engages in a slit **47**, formed in the coupling portion **25**, in such a way that by screwing or unscrewing screw **44**, the latter can rotate but not translate with respect to the coupling portion **25**. Screw **44** engages in the threaded hole of bushing **35**. The threaded coupling and adjustment device **33** enables to couple arm **7** to movable arm-set **3** and adjust its position with respect to casing **1**, in a direction **z**, as indicated by the arrows in figure 3.

As far as the coupling of arm **7** to movable arm-set **3** is concerned, the unit formed by element **11**, adjustment screw **44** and bushing **35**, assembled as previously described, is coupled to support **5** by inserting bushing **35**, that has an annular relief **37**, in a hole of support **5**, until annular relief **37** abuts against a surface **39** of support **5**, and bushing **35** is clamped to support **5** by means of a screw **41** and a washer **43.**

Once arm **7** has been coupled to support **5**, it is possible to adjust its position relative to the head by operating adjustment screw **44**. As adjustment screw **44** can rotate but not translate with respect to arm **7**, by screwing/unscrewing screw **44**, by means of a set screw wrench, and keeping element **11** stationary - in order to prevent it from rotating together with screw **44** - arm **7** is displaced in order to approach to/move away from support **5**, in other terms, with reference to figure 1, effect the lowering/raising of the arm with respect to the head.

Once arm **7** has reached the desired position, the latter is fixed by locking element **11** to bushing **35** by means of a bolt **32** with screw inserted in a pair of facing holes, obtained in the two longitudinal portions **17** and **19**, thereby causing the elastic deformation of the coupling portion **25.**

In order to perform subsequent adjustments, it is sufficient to loosen bolt **32**, adjust the position of arm **7** by means of the adjustment screw **44** and tighten bolt **32** again.

Thus, the threaded coupling and adjustment device **33** enables to secure arm **7** to movable arm-set **3** and position it in an extremely simple and rapid way within a suitable zone for subsequently effecting the electric zero-setting of the head in a known way.

The main advantage that the present invention provides consists in the particular shape of the arm, that enables to reduce its cross-section to one third with respect to the traditional arms, at an equal standard of performance. The stresses, caused by the coolant flowing on the arms according to the invention, are thus considerably reduced as the surface area of the arm that is subject to this flow is smaller.

The particular type of material that is preferably utilized, titanium, provides an optimum ratio between modulus of elasticity and specific weight and enables to achieve rigid arms with low inertia. The low inertia of the arm is particularly important when the head is applied for checking pieces with an interrupted surface. In these cases, the impact occuring between the feeler and the piece when the surface changes from a protruding portion to a recess causes the arm to bounce of an amount proportional to the arm inertia. Furthermore, when a heavy arm falls onto the piece after having bounced, it could damage it, especially if the piece is made of a soft material.

In applications of this type, even the rigidity of the arm is a feature of particular importance. In fact, a not too rigid arm could deform itself as a consequence of impacts occurring between the feeler and the piece.

A further advantage is provided by the manufacturing simplicity of the arm, that can be manufactured by cutting (for example by laser cutting machines) a sheet strap, bending it and thereafter shearing it to obtain the necessary holes. In this way it is possible to avoid welding, that, as known, is a process that can contribute to increase the thermal drift effect, i.e. the deformations of the mechanical parts due to temperature variations that can cause measurement errors.

The arm can be manufactured by utilizing materials that differ from titanium, as, for example, steel.

The manufacturing process is furtherly simplified in the event there is utilized a stainless material, like titanium or stainless steel, as in these cases it is not necessary to carry out any final antioxidizer treatments.

## Claims

1. Arm (**7**) for a head for the linear dimension checking of mechanical pieces, the head including a casing (**1**) and a movable arm-set (**3**), the arm (**7**) having a first end (**13**) for the coupling to the movable arm-set (**3**) and a second end (**15**) for supporting a feeler (**9**), **characterized in that** it includes an element (**11**) made of bent sheet with two longitudinal, separate portions (**17,19**) arranged side by side and a portion (**25**) coupling the two longitudinal portions (**17,19**), at said first end (**13**).

2. An arm (**7**) according to claim 1, wherein said longitudinal portions (**17,19**) arranged side by side have associated free ends adapted for being coupled to each other so as to carry an element (**31**) for supporting said feeler (**9**).

3. An arm (**7**) according to claim 1 or claim 2, wherein said longitudinal portions (**17,19**) arranged side by side are coupled to each other by means of stiffening elements (**21,23**).

4. An arm according to claim 3, wherein said stiffening elements include rivets (**21,23**).

5. An arm (**7**) according to one of claims from 1 to 4, wherein said coupling portion (**25**) is elastically deformable and suitable for being coupled to a support element (**5**) coupled to the movable arm-set (**3**).

6. An arm (**7**) according to claim 5, wherein said longitudinal portions (**17,19**) are adapted for housing a bolt (**32**) for elastically deforming said coupling portion and fixing the arm (**7**) to the movable arm-set (**3**).

7. An arm (**7**) according to one of claims from 1 to 6, wherein said sheet element (**11**) is made of titanium.

8. Head for the linear dimension checking of mechanical pieces including a casing (**1**) that defines a longitudinal geometrical axis, an arm-set (**3**) movable with respect to the support structure, carrying an arm (**7**) and a feeler (**9**), coupled to the arm (**7**), for touching a surface of the mechanical piece to be checked, **characterized in that** said arm (**7**) is in accordance with one of claims from 1 to 7.

9. A head according to claim 8, including a coupling device for coupling the feeler to the arm, the coupling device including a plate (**31**) for supporting the feeler (**9**) and adapted for being placed between said longitudinal, separate portions (**17,19**) and a bolt (**29**) for clamping said longitudinal, separate portions (**17,19**) to said plate (**31**).

10. A head according to claim 8 or claim 9, including a threaded coupling and adjustment device (**33**) for said arm (**7**), that includes a threaded bushing (**35**), coupled to the movable arm-set (**3**), an adjustment screw (**44**), an elastic safety ring (**45**) coupled to the screw (**44**) and the coupling portion (**25**) for enabling rotations of the screw (**44**) and preventing it from translating with respect to the coupling portion (**25**), the threaded bushing (**35**) being coupled to the adjustment screw (**44**) for coupling the arm (**7**) to the movable arm-set (**3**) and adjusting its position with respect to the casing (**1**) of the head, in a direction (**z**).

## Patentansprüche

1. Arm (7) für einen Kopf zum Prüfen der linearen Abmessungen von mechanischen Teilen, wobei der Kopf ein Gehäuse (1) und einen beweglichen Armsatz (3) aufweist und der Arm (7) ein erstes Ende (13) zum Anschließen an den beweglichen Armsatz (3) und ein zweites Ende (15) zum Lagern eines Fühlers (9) besitzt, **dadurch gekennzeichnet, dass** er ein Element (11) aus gebogenem Blech mit zwei getrennten Längsabschnitten (17, 19), die Seite an Seite angeordnet sind, und einem Abschnitt (25), der mit den beiden Längsabschnitten (17, 19) verbunden ist, am ersten Ende (13) aufweist.

2. Arm (7) nach Anspruch 1, bei dem die Längsabschnitte (17, 19), die Seite an Seite angeordnet sind, zugehörige freie Enden aufweisen, die miteinander verbunden werden können, um ein Element (31) zum Lagern des Fühlers (9) zu tragen.

3. Arm (7) nach Anspruch 1 oder 2, bei dem die Seite an Seite angeordneten Längsabschnitte (17, 19) mit Hilfe von Versteifungselementen (21, 23) miteinander verbunden sind.

4. Arm nach Anspruch 3, bei dem die Versteifungselemente Niete (21, 23) umfassen.

5. Arm (7) nach einem der Ansprüche 1 bis 4, bei dem der Verbindungsabschnitt (25) elastisch verformbar ist und mit einem Lagerelement (5), das mit dem beweglichen Armsatz (3) verbunden ist, verbindbar ist.

6. Arm (7) nach Anspruch 5, bei dem die Längsabschnitte (17, 19) zur Aufnahme eines Bolzens (32) zum elastischen Verformen des Verbindungsabschnittes und zum Fixieren des Armes (7) am beweglichen Armsatz (3) geeignet sind.

7. Arm (7) nach einem der Ansprüche 1 bis 6, bei dem das Blechelement (11) aus Titan hergestellt ist.

8. Kopf zum Prüfen der linearen Abmessungen von mechanischen Teilen, der ein Gehäuse (1), das eine geometrische Längsachse aufweist, und einen relativ zur Lagereinheit beweglichen Armsatz (3) aufweist, welcher einen Arm (7) und einen mit dem Arm (7) verbundenen Fühler (9) zur Berührung einer Oberfläche des zu prüfenden mechanischen Teiles trägt, **dadurch gekennzeichnet, dass** der Arm (7) gemäß einem der Patentansprüche 1 bis 7 ausgebildet ist.

9. Kopf nach Anspruch 8 mit einer Kopplungsvorrichtung zum Koppeln des Fühlers mit dem Arm, die eine Platte (31) zum Lagern des Fühlers (9), die zwischen den getrennten Längsabschnitten (17, 19) angeordnet werden kann, und einen Bolzen (29) zum Festklemmen der getrennten Längsabschnitte (17, 19) an der Platte (31) aufweist.

10. Kopf nach Anspruch 8 oder 9 mit einer mit einem Gewinde versehenen Kopplungs- und Einstellvorrichtung (33) für den Arm (7), die eine Gewindebuchse (35), welche mit dem beweglichen Armsatz (3) verbunden ist, eine Stellschraube (44) und einen elastischen Sicherheitsring (45) aufweist, der mit der Schraube (44) und dem Verbindungsabschnitt (25) verbunden ist, um Drehungen der Schraube (44) zu ermöglichen und eine Translationsbewegung derselben relativ zum Verbindungsabschnitt (25) zu verhindern, wobei die Gewindebuchse (35) mit der Stellschraube (44) verbunden ist, um den Arm (7) mit dem beweglichen Armsatz (3) zu verbinden und dessen Position relativ zum Gehäuse (1) des Kopfes in einer Richtung (z) einzustellen.

## Revendications

1. Bras (7) s'adaptant à une tête pour contrôler les dimensions linéaires des pièces mécaniques, la tête comportant un boîtier (1) et un bloc de bras mobile (3), le bras (7) ayant une première extrémité (13) pour le couplage avec le bloc de bras mobile (3) et une seconde extrémité (15) pour supporter un palpeur (9), **caractérisé en ce qu'**il comporte un élément (11) composé d'une tôle recourbée avec deux parties longitudinales séparées (17, 19) agencées côte à côte et une partie (25) couplant les deux parties longitudinales (17, 19), au niveau de ladite première extrémité (13).

2. Bras (7) selon la revendication 1, dans lequel lesdites parties longitudinales (17, 19) agencées côte à côte ont des extrémités libres associées conçues pour être couplées l'une à l'autre de façon à porter un élément (31) afin de supporter ledit palpeur (9).

3. Bras (7) selon la revendication 1 ou la revendication 2, dans lequel lesdites parties longitudinales (17, 19) agencées côte à côte sont couplées l'une à l'autre au moyen d'éléments de raidissement (21, 23).

4. Bras selon la revendication 3, dans lequel lesdits éléments de raidissement comportent des rivets (21, 23)

5. Bras (7) selon l'une des revendications 1 à 4, dans lequel ladite partie de couplage (25) peut se déformer sur le plan élastique et convient pour être couplée à un élément de support (5) couplé au bloc de bras mobile (3).

6. Bras (7) selon la revendication 5, dans lequel lesdites parties longitudinales (17, 19) sont conçues pour loger un boulon (32) afin de déformer, sur le plan élastique, ladite partie de couplage et de fixer le bras (7) au bloc de bras mobile (3).

7. Bras (7) selon l'une des revendications 1 à 6, dans lequel ledit élément en tôle (11) est composé de titane.

8. Tête pour contrôler les dimensions linéaires des pièces mécaniques, comportant un boîtier (1), qui définit un axe géométrique longitudinal, un bloc de bras (3), mobile par rapport à la structure de support, portant un bras (7) et un palpeur (9), couplé au bras (7), afin de toucher une surface de la pièce mécanique qui doit être contrôlée, **caractérisé en ce que** ledit bras (7) correspond à l'une des revendications 1 à 7.

9. Tête selon la revendication 8, comportant un dispositif de couplage pour coupler le palpeur au bras, le dispositif de couplage comportant une plaque (31) pour supporter le palpeur (9) et conçue pour être placée entre lesdites parties séparées longitudinales (17, 19) et un boulon (29) afin de claveter lesdites parties séparées longitudinales (17, 19) sur ladite plaque (31).

10. Tête selon la revendication 8 ou la revendication 9, comportant un dispositif de réglage et de couplage fileté (33) pour ledit bras (7) qui comporte une bague filetée (35), couplée au bloc de bras mobile (3), une vis de réglage (44), un anneau de sûreté élastique (45) couplé à la vis (44), et à la partie de couplage (25) permettant des rotations de la vis (44) et l'empêchant de se déplacer par rapport à la partie de couplage (25), la bague filetée (35) étant couplée à la vis de réglage (44) afin de coupler le bras (7) au bloc de bras mobile (3) et de régler sa position par rapport au boîtier (1) de la tête, dans une direction (z).
